(19) Europäisches Patentamt
European Patent Office
Office européen des brevets

(11) **EP 1 844 572 B1**

(12) **EUROPEAN PATENT SPECIFICATION**

(45) Date of publication and mention
of the grant of the patent:
**21.05.2008 Bulletin 2008/21**

(21) Application number: **06703899.2**

(22) Date of filing: **13.01.2006**

(51) Int Cl.:
*H04L 9/08* (2006.01)

(86) International application number:
**PCT/IB2006/000055**

(87) International publication number:
**WO 2006/075243 (20.07.2006 Gazette 2006/29)**

(54) **METHOD AND DEVICE FOR THE GENERATION AND AUTHENTICATION OF A CRYPTOGRAPHIC KEY USED FOR THE RECIPROCAL ANTHENTICATION OF TWO MOBILE TERMINALS**

VERFAHREN UND EINRICHTUNG ZUR ERZEUGUNG UND AUTHENTIFIKATION EINES ZUR REZIPROKEN AUTHENTIFIZIERUNG ZWEIER MOBILER ENDGERÄTE VERWENDETEN KRYPTOGRAPHISCHEN SCHLÜSSELS

PROCEDE ET DISPOSITIF DE GENERATION ET D'AUTHENTIFICATION D'UNE CLE CRYPTOGRAPHIQUE UTILISEE POUR L'AUTHENTIFICATION RECIPROQUE DE DEUX TERMINAUX MOBILES

(84) Designated Contracting States:
**AT BE BG CH CY CZ DE DK EE ES FI FR GB GR HU IE IS IT LI LT LU LV MC NL PL PT RO SE SI SK TR**

(30) Priority: **13.01.2005 IT TO20050013**

(43) Date of publication of application:
**17.10.2007 Bulletin 2007/42**

(73) Proprietor: **Cisim Real Estate S.r.l.**
**20123 Milano (IT)**

(72) Inventor: **FERRARO, Ivan,**
**c/o Ferraro C & S S.r.l.**
**I-20123 Milano (IT)**

(74) Representative: **Jorio, Paolo et al**
**Studio Torta S.r.l.**
**Via Viotti, 9**
**10121 Torino (IT)**

(56) References cited:
**EP-A- 1 531 558          WO-A-96/22643**
**WO-A-02/054807**

• **HERSHEY J E ET AL: "UNCONVENTIONAL CRYPTOGRAPHIC KEYING VARIABLE MANAGEMENT" IEEE TRANSACTIONS ON COMMUNICATIONS, IEEE INC. NEW YORK, US, vol. 43, no. 1, January 1995 (1995-01), pages 3-6, XP000487370 ISSN: 0090-6778**

**Description**

TECHNICAL FIELD

This invention relates to a method and device for the generation and authentication of a cryptographic key used for the reciprocal authentication of two mobile terminals that intend to set up a communication.

BACKGROUND ART

As is known, wireless telecommunication networks do not guarantee the same security levels as fixed cable ones. The ease of access to wireless networks and the resulting interception of information are principally due to the ability to access information without setting up a physical connection to the network.
To make wireless communication more secure, each user who wants to access network resources must be clearly identified by the network access system and the information that enabled users want to exchange must be encrypted with secret codes, called cryptographic keys and known only to the users.
As is known, there are different ways of controlling the coding of the information transmitted and access to a wireless network by a user. For example, among the most common ways of user access to a wireless network there are:

• Open System Authentication

• Shared Key Authentication

• Digital certification with Public/Private Key Pair

The Open System Authentication method does not have any authentication process; access to the network is assured to any mobile device. In this case, confidentiality is only guaranteed by data codification. The Shared Key Authentication method uses a "pro-shared" key in the user authentication process. When a network access system receives a request from a user, the network sends a message containing a random number to that user. The user processes the random number using a secret pre-shared key (known to both the access system and the user) and sends the answer to the access system. This extracts the "pre-shared" key from the answer and, if it is effectively shared with that user, he is authenticated and can access the network. The third method uses digital certificates for the authentication process. User A asks User B for the public key and this is authenticated with a digital certificate by a third entity considered reliable by both parties. User A generates a random number, encrypts it with User B's public key and transmits the encrypted message to User B. Now only User B, who has his own private key, is able to decrypt the message and discover the random number chosen by User A.
All the authentication mechanisms described above have problems with the management of keys and network access, in particular with the random updating of keys and management of no longer valid keys.
The creation, transfer and authentication of absolutely random cryptographic keys for use on unsafe public radio channels, such as wireless, is therefore an unresolved problem of great interest, which the whole cryptographic world has been trying to solve. So far, there are no systems able to:

• Generate absolute random cryptographic keys.

• Transfer keys from one legitimate user to another securely.

• Update keys.

• Store keys quickly and economically.

Commonly used key agreement protocols are based on a special class of mathematical transformations that are trivial to perform but for which the inverse is an intractable problem, at least with currently available techniques and computing resources.
However, nobody has yet demonstrated that such problems are unsolvable regardless of any future development of mathematics, statistics and computing science and this leads to some implementation issues. In fact, it's not possible to define all controls to guarantee a strong, non-trivially-solvable problem and so real security a function of individual implementations and not subjected to absolute metrics.
Moreover, a simple migration of current techniques used to offer confidentiality and authentication in the wired networks turns out inadequate for wireless networks, because constraints presented by wireless networks are not critical constraints for the wired networks such as:

- Unpredictable changes in the communication environment

- Power aware devices

- Changes in the quality and connectivity of link

Patent WO 96/22643 describes a method that uses characteristics of radio channel to establish key sequences used for encrypting communicated information. These characteristics are short-term reciprocity and rapid spatial decorrelation of phase of the radio channel. The keys can be established with computations equivalent to a bounded distance decoding procedure, and the decoder used to establish a key may be used for processing the subsequent data transmission. Compared to classical and public key systems, an alternative mechanism for establishing and sharing key sequences that depends on a physical process is provided in which each party need not generate a pseudorandom quantity because the necessary randomness is provided by the temporal and spatial non-stationarity of the communication channel itself. By using a channel decoder, the probability of two users establishing the same secret is substantially unity, and the probability of an eavesdropper establishing the same key is substantially zero. Also, the number of possible keys is large enough that finding the correct one by exhaustive search is impractical.

In the solution proposed in WO 96/22643, in order to converge to a common cryptographic key, the two parties use the same pre-shared digital sequences, which have to be known by both. It is clear that use of pre-shared digital sequences tends to render the transfer of the cryptographic keys rather uncertain, because the previously determined pre-shared digital sequences might also be known also to other, undesired spy stations.

Experimental measurements have also shown that the hypothesis of short-term reciprocity is not true in most cases; even when true (noise-free radio channel) the radio channel spatial decorrelation hypothesis is no longer valid, thus making it difficult to determine the same cryptographic key.

Moreover, at present, the degree of channel coefficient phase randomness, needed to obtain both high key convergence probability and high key entropy, has yet not been verified.

DISCLOSURE OF INVENTION

The aim of this invention is to create a method and device for the generation and authentication of a cryptographic key used without the problems highlighted above. This aim has been reached by this invention as defined in claim 1.

BRIEF DESCRIPTION OF THE DRAWINGS

In order to understand this invention better, a preferred type of implementation will now be described, purely as an example and referring to the attached drawings in which:

- Figure 1 shows the block diagram of two mobile terminals of a wireless network, equipped with a device for the generation and authentication of a cryptographic key configured to implement the method which is the subject of this invention.

- Figure 2 shows a schematic example of the exchange of a cryptographic key between two mobile terminals and the attempt at interception of the key by two spy terminals.

- Figures 3 a and 3b show steps in this invention relating to the generation of a cryptographic key.

- Figure 4 shows steps in this invention relating to the authentication of a cryptographic key.

- Figure 5 shows an example of (D)MPSK phase modulation.

BEST MODE FOR CARRYING OUT THE INVENTION

The method of the invention described below is based on two fundamental considerations:

- The whole process of generation and authentication of cryptographic keys by two mobile terminals must happen in less time than the so-called channel coherence time, inside of which the coefficients of the channel impulse response can be considered constant;

• The distance between legitimate and spy terminals which attempt to intercept data transmitted by the former must be such that the channel used for communication between the legitimate and spy terminals is not spatially correlated to the channel used for the communication between the legitimate terminals;

Where the latter hypothesis were not verified by nature of the physical channel, it is possible to introduce scattering panels close to mobile station antennas, so as to artificially create a spatial decorrelation effect on radio channel phase. Therefore, in the following description the two hypotheses will always be considered as verified.

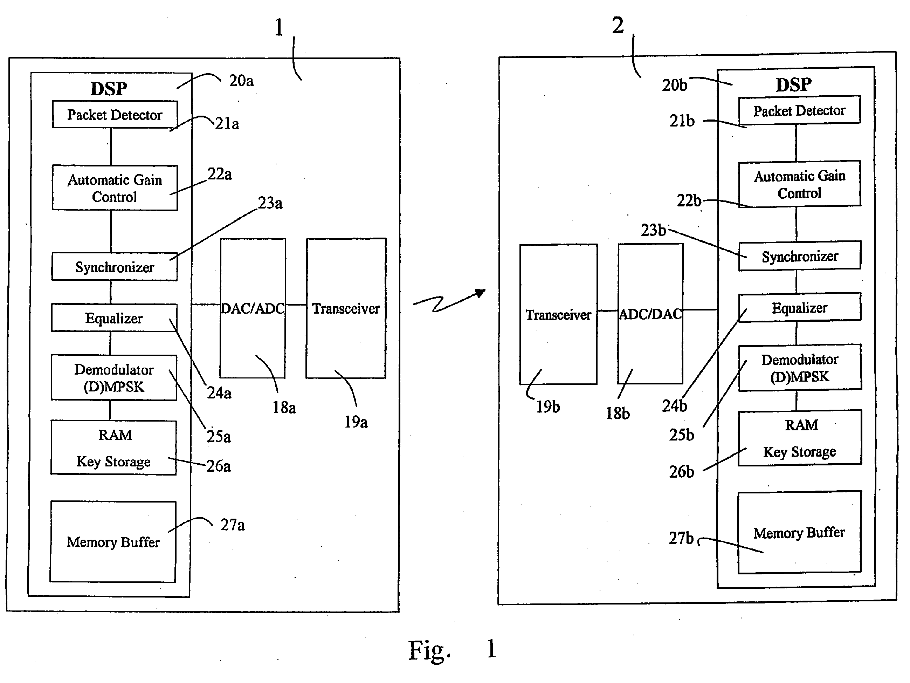

The block diagrams of two mobile terminals of a wireless network are shown in Figure 1, indicated respectively with 1 and 2. They are equipped with a device configured to implement the method for the generation and authentication of a cryptographic key described in this invention. Stations 1 and 2 are perfectly equal. For this reason, the corresponding elements of stations 1 and 2 are distinguished by the same number and different footnotes (a) and (b) in the following description. In particular, mobile station 1 (2) includes at least one transceiver unit of a known type 19a (19b), able to transmit and receive modulated radio signals; analogue/digital and digital/analogue 18a (18b) of a known type, communicating with the transceiver 19a (19b); and a digital processor of a known type 20a (20b), communicating with converters 18a (18b) and able to process the input/output data to the converters. In turn, the processor 20a (20b) includes:

• A data packet detector (PD) 21a (21b);

• An automatic gain control (AGC) 22a (22b);

• A synchronizer 23a (23b);

• An equalizer 24a (24b);

• A demodulator (D)MPSK 25a (25b);

• A RAM memory 26a (26b);

• A buffer memory 27a (27b);

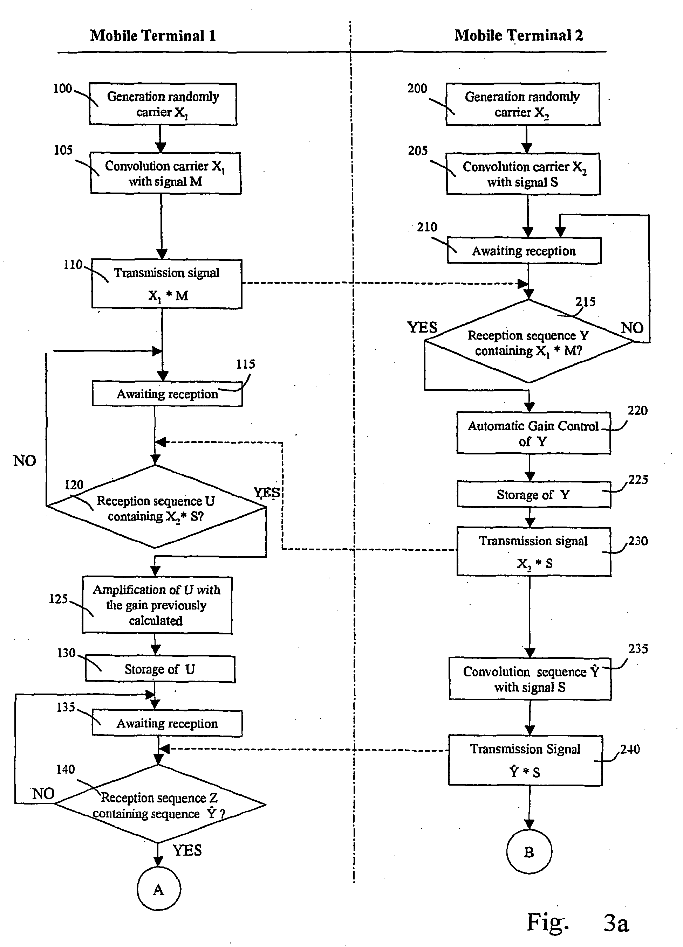

The procedure for the generation of a new cryptographic key, which will be used for the entire communication to encrypt the data exchanged by mobile terminals 1 and 2, is started by the digital processors 20a (20b) of the two mobile terminals in blocks 100 and 200 of Figure 3a. To that end, the two processors 20a (20b) in blocks 100 and 200 respectively generate a sequence of data $X_1$, known only to mobile terminal 1 - in the following denominated carrier $X_1$ - and a sequence of data $X_2$, known only to mobile terminal 2 - in the following denominated carrier $X_2$. In particular, carriers $X_1$ and $X_2$ are made up of a sequence of bits of a predefined length, for example 512 -256 bits, and have random properties. In other words, they can be:

• Purely random, that is made up of bits, each of which has a 50% probability of taking on 1 or 0;

• Mainly random, that is made up of bits, most of which have a 50% probability of taking on 1 or 0;

• Partially random, that is made up of bits, some of which have a 50% probability of taking on 1 or 0.

For instance, in the way of realization that is described in the following sentences the carriers $X_1$ e $X_2$ are made up by a periodical signal that has a period composed by a purely random bit sequence It is well known that a radio channel used for the transmission of data between mobile terminals introduces a phase delay which can be shaped as a variable of uniform, or almost uniform, distribution in the signals transmitted.

To compensate for any lack of uniformity in channel phase coefficients used by mobile terminals 1 and 2, processor 20a carries out a convolution operation between carrier $X_1$ and a signal M with uniform phase coefficients known only to mobile terminal 1 (block 105 after block 100). At the same time, processor 20b of mobile terminal 2 carries out the convolution operation between carrier $X_2$ and a signal S known only to itself, which also has uniform phase coefficients (block 205 after block 200).

To facilitate the operations of detecting the data packets made by PD 21a (21b) the sample sequences, obtained from the convolution operation of blocks 105 and 205, must preferably have a predefined length. Following the convolution operation, the sample sequence $(X_1*M)$ is sent to the digital/analogue converter 18a, modulated by an analogue modulator of a known type, inside transceiver unit 19a, and transmitted from this to mobile terminal 2 via a radio channel, indicated with $h_{12}(t_1)$, in an instant $t_1$ (block 110 after block 105). After transmitting signal $(X_1*M)$ terminal 1 awaits reception (block 115 after block 110).

Transceiver unit 19b of mobile terminal 2 receives the signal transmitted by mobile terminal 1, demodulates it and sends it to the analogue/digital converter 18b which transforms the demodulated signal into a sample sequence Y. These operations are shown in block 210 (awaiting reception) after block 205 and block 215 after block 210, able to detect sequence Y. To that end, sample sequence Y is sent to PD 21b which has to identify a data packet inside the signal received, distinguishing it from noise. If PD 21b doesn't detect any data packet, mobile terminal 2 returns to the awaiting reception phase (output NO in block 215). If not (output YES in block 215), the dynamics of the signal in sequence Y are returned to a level preset by AGC 22b (block 220 after block 215) and then sequence Y is stored in memory 27b (block 225 after block 220). However, data sequence Y received by mobile terminal 2 is different from the sample sequence $(X_1{}_*M)$ transmitted by mobile terminal 1 following the distortion introduced by the radio channel $h_{12}$ $(t_1)$ and can be described by the equation:

$$Y = G_1 h_{12}(t_1) * X_1 * M + w_1 \qquad\qquad (1)$$

where $G_1$ indicates the amplification gain between stations 1 and 2 and $w_1$ an aleatory variable representing the Gaussian white noise.

Equation (1), which describes sequence Y, clearly shows how this contains carrier $X_1$ convoluted with signal M and the channel coefficients $h_{12}(t_1)$ plus a noise component $w_1$. After storing sequence Y, mobile terminal 2 sends sample sequence $(X_2{}_*S)$ (also of a predefined length) to digital/analogue converter 18b and thus to the transceiver unit 19b. This operation is shown in block 230 after block 225. Transceiver unit 19b modulates the signal $(X_2{}_*S)$ and transmits it to mobile terminal 1 via a radio channel, indicated with $h_{21}(t_2)$, in an instant $t_2$.

Transceiver unit 19a of mobile terminal 1 receives the signal transmitted by mobile terminal 2, demodulates it and sends it to the analogue/digital converter 18a which transforms the demodulated signal into a sequence of samples U (operation shown in block 120 after block 115).

Sequence U is then sent to PD 21a to identify a data packet inside the signal received, distinguishing it from noise. If PD 21 a doesn't detect any data packet, mobile terminal 1 returns to the awaiting reception phase (output NO, block 120). If not (output YES, block 120), the dynamics of the signal in sequence U are returned to a level preset by AGC 22a (block 125 after block 120) and then sequence U is stored in memory 27a (block 130 after block 125). Also in this case data sequence U received by mobile terminal 1 is different from the sample sequence transmitted by mobile terminal 2 because of the distortion introduced by radio channel $h_{21}(t_2)$ and can be described by the equation:

$$U = G_2 h_{21}(t_2) * X_2 * S + w_2 \qquad\qquad (2)$$

where $G_2$ indicates the amplification gain between stations 2 and 1, and $w_2$ an aleatory variable representing the Gaussian white noise.

The equation (2) which describes sequence U clearly shows how this also contains the carrier $X_2$ convoluted with signal S and the channel coefficients $h_{21}(t_2)$, plus a noise component $w_2$. After transmitting the sequence $(X_2{}_*S)$, processor 20b of mobile terminal 2 carries out the convolution operation between signal S with uniform phase coefficients and sequence $\hat{Y}$ (block 235 after block 230). Sequence $\hat{Y}$ is obtained by multiplying the previously stored sequence Y with sequence $a_n(Y)$, function of Y.

For instance, considering samples of sequence Y formed by integer numbers and saying c a positive integer number the sequence $a_n(Y)$ is such that the multiplication $Y \cdot a_n(Y)$ is equal to:

$$Y \cdot a_n(Y) = Mod(Y, c);$$

where Mod is Modulo c function. It is interesting to remember a very important property of Mod function, regarding the consideration that the module of a convolution is equal to convolution of modules, where the equality is a modulo equality.

Therefore, in the following description, in order to explain, the function before described is been considered as $a_n(Y)$ sequence, and equality of expression as modulo equality.

Sequence $a_n$ with a length equal to that of sequence Y is used to introduce an additional element of disturbance in the information that is exchanged by the two mobile terminals and from which the cryptographic key will be extracted, thus making a hypothetical attempt at interception of the key by a hypothetical spy terminal even more difficult.

After the multiplication of sequence Y with sequence $a_n$ the following is obtained:

$$\hat{Y} = [G_1 h_{12}(t_1) * X_1 * M + w_1] \cdot a_n(Y) \tag{3}$$

After carrying out the multiplication and convolution operations, processor 20b sends sequence $(\hat{Y} * S)$ to the digital/analogue converter and then to the transceiver unit 19b, which in instant $t_3$ modulates the signal thus obtained and transmits it to mobile terminal 1 via a radio channel indicated with $h_{21}(t_3)$ (block 240 after block 235).

Transceiver unit 19a of mobile terminal 1 receives the signal transmitted by mobile terminal 2 in instant $t_3$, demodulates it and sends it to the analogue/digital converter 18a which transforms the demodulated signal into a sequence of samples Z. These operations are shown in block 135 (awaiting reception) after block 130 and in block 140 after block 135.

Sequence Z is also then sent to PD 21a. If PD 21a doesn't detect any data packet, mobile terminal 1 returns to the awaiting reception phase (output NO in block 140). If not (output YES in block 140), the dynamics of the signal in sequence Z is amplified with a gain previously calculated by AGC 22a (block 145 after block 140).. Also in this case the sequence data Z received by mobile terminal 1 will be different from the sequence $(\hat{Y} * S)$ transmitted by mobile terminal 2 because of the distortion introduced by the radio channel $h_{21}(t_3)$ and can be described by the equation:

$$Z = G_2 h_{21}(t_3) * \hat{Y} * S + w_3 \tag{4}$$

where $w_3$ is an aleatory variable representing the Gaussian white noise.

Equation (4), which describes sequence Z clearly shows how this also contains the sequence $\hat{Y}$ convoluted with signal S and channel coefficients $h_{21}(t_3)$, plus a noise component $w_3$.

If equation (3), which describes sequence $\hat{Y}$, is introduced into equation (4), the following is obtained:

$$Z = G_2 h_{21}(t_3) * [(M * G_1 h_{12}(t_1) * X_1) \cdot a_n(Y)] * S + w_4 \tag{5}$$

where $w_4$ is an aleatory variable representing the Gaussian white noise.

As a result of the modulo equality and the properties which sequence $a_n(Y)$ enjoys, equation (5) can be rewritten as:

$$Z = (G_1 G_2 X_1 * M * h_{12}(t_1) * h_{21}(t_3) * S) \cdot a_n(G_1 G_2 X_1 * M * h_{12}(t_1) * h_{21}(t_3) * S) + w_4 \tag{6}$$

After receiving sequence Z, processor 20a of mobile terminal 1 carries out the convolution operation between signal M with uniform phase coefficients and sequence $\hat{U}$ (block 150 after block 145), obtained by multiplying the previously stored sequence U with sequence $b_n(U)$, function of U, which is in prefixed relationship to sequence $a_n(U)$, for example $b_n(U) = a_n(U)$, according to the formula:

$$\hat{U} = [G_2 h_{21}(t_2) * X_2 * S + w_2] \cdot b_n(U) \tag{7}$$

Therefore, in the following description, in order to explain, the function $b_n$ is equal to $a_n$.

Processor 20a then transmits the sequence thus obtained to the digital/analogue converter 18a and transceiver unit 19a which, in instant $t_4$, modulates sequence $\hat{U}$ convoluted with signal M and transmits it to mobile terminal 2 via a radio channel indicated with $h_{12}(t_4)$ (block 155 after block 150).

Transceiver unit 19b of mobile terminal 2 receives the signal transmitted by mobile terminal 1 in instant $t_4$, demodulates it and sends it to the analogue/digital converter 18b which transforms the demodulated signal into a sequence of samples V. These operations are shown in block 245 (awaiting reception) after block 240 and in block 250 after block 245.

Sequence V is also then sent to PD 21b. If PD 21b doesn't detect any data packet, mobile terminal 2 returns to the awaiting reception phase (output NO in block 250). If not (output YES in block 250), the dynamics of the signal in sequence V is amplified with a gain previously calculated by AGC 22b (block 255 after block 250). Also in this case the sequence data V received by mobile terminal 2 will be different from the sequence $(\hat{U}*M)$ transmitted by mobile terminal 1 because of the distortion introduced by the radio channel $h_{12}(t_4)$ and can be described by the equation:

$$V = G_1 h_{12}(t_4) * \hat{U} * M + w_5 \qquad (8)$$

where $w_5$ is an aleatory variable representing the Gaussian white noise.

Equation (8), which describes sequence V clearly shows how this also contains the sequence $\hat{U}$ convoluted with signal M and channel coefficients $h_{12}(t_4)$, plus a noise component $w_5$.

If equation (7), which describes sequence $\hat{U}$, is introduced into equation (8), the following is obtained:

$$V = G_1 h_{12}(t_4) * [G_2 h_{21}(t_2) * X_2 * S] \cdot b_n(U) * M + w_6 \qquad (9)$$

where $w_6$ is an aleatory variable representing the Gaussian white noise.

As a result of the modulo equality and the properties which sequence $b_n(U)$ enjoys, equation (9) can be rewritten as:

$$V = (G_1 G_2 X_2 * S * h_{21}(t_2) * h_{12}(t_4) * M) \cdot b_n(G_1 G_2 X_2 * S * h_{21}(t_2) * h_{12}(t_4) * M) + w_6 \qquad (10)$$

If all the phases described above relating to the exchange of the random carriers $X_1$ and $X_2$ between mobile terminals 1 and 2, occur in an interval of time much less than the so-called channel coherence time, the following will result:

$$h_{21}(t_2) = h_{21}(t_3) = h_{21} \qquad (11)$$

and,

$$h_{12}(t_1) = h_{12}(t_4) = h_{12} \qquad (12)$$

and therefore:

$$Z = (G_1 G_2 X_1 * M * h_{12} * h_{21} * S) \cdot a_n(G_1 G_2 X_1 * M * h_{12} * h_{21} * S) + w_4 \qquad (13)$$

$$V = (G_1 G_2 X_2 * S * h_{21} * h_{12} * M) \cdot b_n(G_1 G_2 X_2 * S * h_{21} * h_{12} * M) + w_6 \qquad (14)$$

To be able to converge to the same sequence from which to extract the cryptographic key, the two mobile terminals must first be synchronized on precise samples of sequences Z and V. This can be carried out because mobile terminal 1 knows carrier $X_1$ and therefore also product $X_1a_n$. In the same way, mobile terminal 2 knows carrier $X_2$ and therefore also product $X_2b_n$. This phase of the method is described in blocks 160 and 260.

At the end of the synchronization phase there is an equalization phase (block 165 after block 160) in which digital processor 20a of terminal 1 eliminates the sequence $X_1$ from sequence Z, thus obtaining:

$$Z=(G_1G_2*M*h_{12}*h_{21}*S)\cdot a_n(G_1G_2*M*h_{12}*h_{21}*S) + w_7 \qquad (15)$$

where $w_7$ is an aleatory variable representing the Gaussian white noise.

At the same time, in block 265 after block 260, digital processor 20b in terminal 2 eliminates sequence $X_2$ from sequence V, thus obtaining:

$$V=(G_1G_2*S*h_{21}*h_{12}*M)\cdot b_n(G_1G_2*S*h_{21}*h_{12}*M) + w_8 \qquad (16)$$

where $w_8$ is an aleatory variable representing the Gaussian white noise.

As a result of the properties which sequence $b_n$ enjoys, and considering that, in this implementation, $a_n=b_n$, equation (16) can be rewritten as:

$$V=(G_1G_2*S*h_{21}*h_{12}*M)a_n(G_1G_2*S*h_{21}*h_{12}*M) + w_8 \qquad (17)$$

Comparing equations (15) and (17)

$$Z=(G_1G_2*M*h_{12}*h_{21}*S)a_n(G_1G_2*M*h_{12}*h_{21}*S) + w_7 \qquad (15)$$

$$V=(G_1G_2*S*h_{21}*h_{12}*M)a_n(G_1G_2*S*h_{21}*h_{12}*M) + w_8 \qquad (17)$$

it can be noted that sequence Z, received and processed by mobile terminal 1, and sequence V, received and processed by mobile terminal 2, are only differentiated by the respective white noise components $w_7$ and $w_8$. As a result, sequences Z and V can be described by the same sequence of bits.

Extraction of the bits which describe sequences Z and V is made through a quantization of the sequences which, in turn, can be obtained through a (D)MPSK demodulation. To that end, in block 170 after 165, digital processor 20a carries out (D)MPSK demodulation of sequence Z (15) and stores the bits obtained which are the bits of the cryptographic key, acquired by mobile terminal 1 in block 175 after block 170.

In order to reduce the error probability, digital processor 20a makes use of carrier $X_1$ periodicity.

At the same time, in block 270 after block 265, digital processor 20b carries out a (D)MPSK demodulation of sequence V (17) and stores the bits obtained which are the bits of the cryptographic key acquired by mobile terminal 2 in block 275 after block 270.

In order to reduce the error probability, digital processor 20b makes use of carrier $X_2$ periodicity.

Therefore, by taking advantage of the channel coherence time and the variability of signals M and S, which have uniform phase coefficients and are only known to mobile terminals 1 and 2, two mobile terminals can converge to a common cryptographic key which is different every time and depends on the features of the channel impulse response.

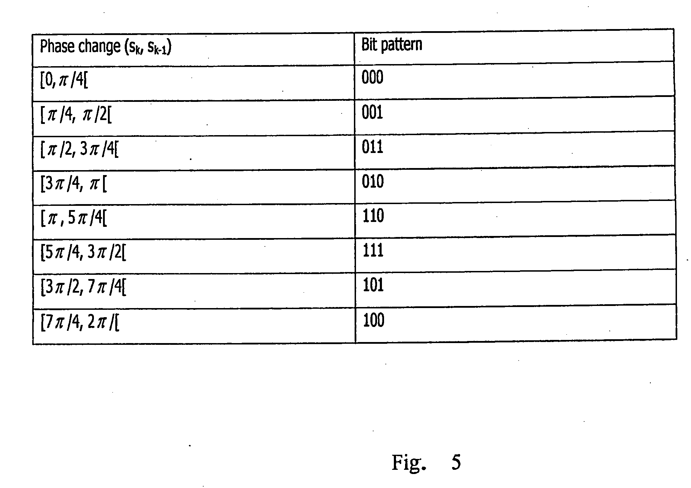

As is known, and shown in Figure 5, the difference of phase between two consecutive signal samples received is calculated and a predefined bit sequence is associated with each difference in the (D)MPSK demodulation. As can easily be imagined from the table in Figure 5, the error probability in (D)MPSK demodulation grows with the decrease in the distance between the phase difference of two consecutive samples of the signal received and the decision threshold. To reduce the error probability during the demodulation phase, processor 20a calculates the absolute value of the phase difference between two consecutive signal samples received and stores the combinations of bits associated with the differences which are closest to the decision thresholds and could be affected by error (block 175 after block 170). Mobile terminal 1 will correct these bits if it doesn't obtain the same cryptographic key acquired by mobile terminal 2.

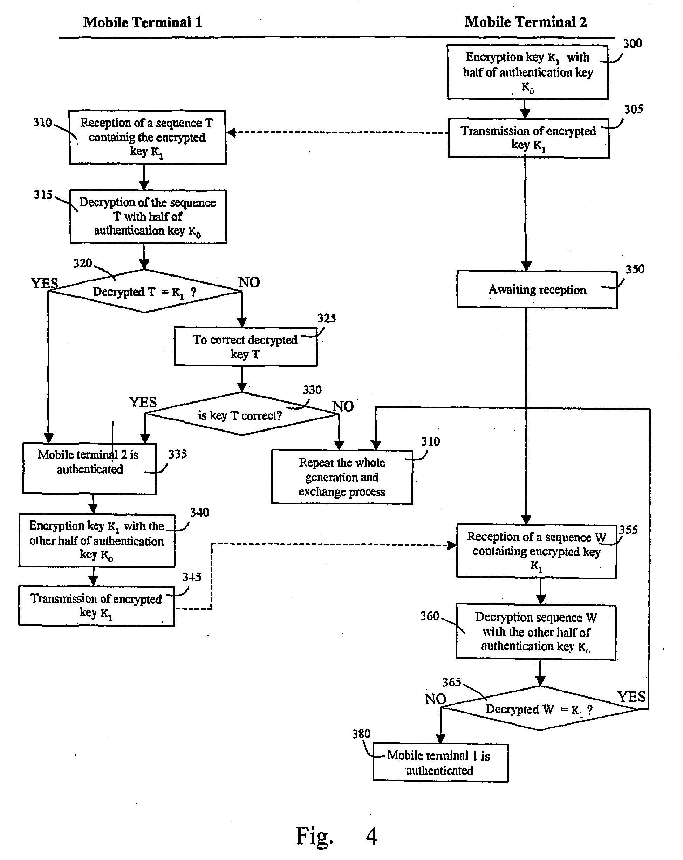

At the end of the demodulation phase, digital processors 20a and 20b calculate cryptographic key $K_1$ (blocks 170 and 270 after the respective blocks 165 and 265). This key will later be subjected to checking (shown in Figure 4) and, if the outcome is positive, it will be used to codify the data packets transmitted by the two mobile terminals during the whole communication.

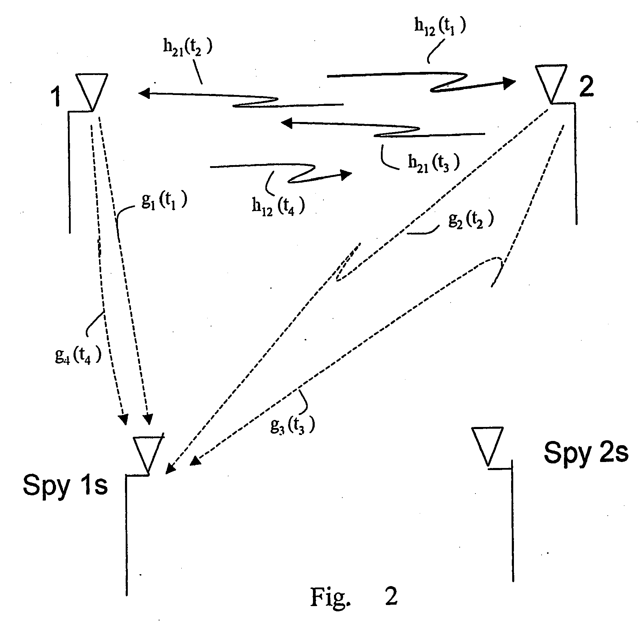

With reference to Figure 2, it is now supposed that a spy terminal 1s, which has the same device for the generation and authentication of a cryptographic key as mobile terminal 2, tries to intercept the carrier $X_1$ convoluted with signal M transmitted by mobile terminal 1 in instant $t_1$. Even if it had the same device, spy terminal 1s can't receive exactly the same signal as that received by mobile terminal 2 because the signal reaching spy terminal 1s passes through a radio channel $g_1(t_1)$, clearly different from the channel $h_{12}(t_1)$ used by mobile terminal 1 to transmit the signal $(X_1*M)$ to mobile terminal 2. Therefore spy terminal 1s receives a sequence equal to:

$$N = G_1 g_1(t_1) * X_1 * M + w_9 \qquad\qquad (18)$$

where $G_1$ indicates the amplification gain between station 1 and the spy 1s, and $w_9$ an aleatory variable representing the Gaussian white noise.

The equation (18) describing sequence N clearly shows that this also contains the carrier $X_1$ convoluted with signal M transmitted by mobile terminal 1. Unlike sequence Y received by mobile terminal 2, sequence N is convoluted with the coefficients which typify the channel $g_1(t_1)$ rather than those of the channel $h_{12}(t_1)$. Analogously, when the spy terminal 1s tries to intercept sequence $X_2$ convoluted with signal S transmitted by mobile terminal 2 in the instant $t_2$, it would not receive a signal which is exactly the same as that received by mobile terminal 1 because the signal reaching the spy 1s would pass through a radio channel $g_2(t_2)$, clearly different from the channel $h_{21}(t_2)$ used by mobile terminal 2 to transmit the signal $(X_2*S)$ to mobile terminal 1. In this case the sequence P received by the spy 1s is equal to:

$$P = G_2 g_2(t_2) * X_2 * S + w_{10} \qquad\qquad \cdot\ (19)$$

where $G_2$ indicates the amplification gain between station 2 and the spy 1s and $w_{10}$ an aleatory variable representing the Gaussian white noise.

Also in this case equation (19) describing sequence P clearly shows that this also contains the carrier $X_2$ convoluted with signal S transmitted by mobile terminal 2. Unlike sequence U received by mobile terminal 1, sequence P is convoluted with the coefficients which typify the channel $g_2(t_2)$ rather than those of the channel $h_{21}(t_2)$.

If the hypothetical spy terminal 1ls shown in Figure 2 also tries to intercept sequence $\hat{Y}$ (3) convoluted with signal S transmitted in instant $t_3$ using the radio channel $g_2(t_3)$, it would receive a signal Q equal to:

$$Q = G_2 g_2(t_3) * \hat{Y} * S + w_{11} \qquad\qquad (20)$$

where $G_2$ indicates the amplification gain between station 2 and the spy 1s and $w_{11}$ an aleatory variable representing the Gaussian white noise.

As shown in the expression (20), the equation describing sequence Q also contains sequence $\hat{Y}$ convoluted with signal $\hat{S}$ and the coefficients which typify the channel $g_2(t_3)$ plus a noise component $w_{12}$. If the expression describing sequence $\hat{Y}$ is introduced into this equation, the following is obtained:

$$Q = G_1 G_2 g_2(t_3) * [(M * h_{12}(t_1) * X_1) \cdot a_n(Y)] * S + w_{12} \qquad\qquad (21)$$

where $w_{12}$ an aleatory variable representing the Gaussian white noise.

If the hypothetical spy terminal 1s shown in Figure 2 also tries to intercept sequence $\hat{U}$ (7) convoluted with signal M transmitted in instant $t_4$ using the radio channel $g_1(t_4)$, it would receive a signal R equal to:

$$R = G_1 g_1(t_4) * \hat{U} * M + w_{13} \quad (22)$$

where $G_1$ indicates the amplification gain between station 1 and the spy 1s and $w_{13}$ an aleatory variable representing the Gaussian white noise.

As shown in the expression (22), the equation describing sequence R also contains sequence $\hat{U}$ convoluted with signal M and the coefficients which typify the channel $g_1(t_4)$ plus a noise component $w_{13}$. If the expression describing sequence $\hat{U}$ is introduced into this equation, the following is obtained:

$$R = G_1 G_2 g_1(t_4) * [(h_{21}(t_2) * X_2 * S) \cdot b_n(U)] * M + w_{14} \quad \text{'} \quad (23)$$

where $W_{14}$ an aleatory variable representing the Gaussian white noise.

To summarize, the sequences intercepted by spy terminal 1s are:

$$N = G_1 g_1(t_1) * X_1 * M + w_9 \quad (18)$$

$$Q = G_1 G_2 g_2(t_3) * [(M * h_{12}(t_1) * X_1) \cdot a_n(Y)] * S + w_{12} \quad (21)$$

$$P = G_2 g_2(t_2) * X_2 * S + w_{10} \quad (19)$$

$$R = G_1 G_2 g_1(t_4) * [(h_{21}(t_2) * X_2 * S) \cdot b_n(U)] * M + w_{14} \quad (23)$$

By analyzing the sequences intercepted by spy terminal 1s, it can be deduced that, even if this was able to perform the synchronization and equalization operations carried out by mobile terminals 1 and 2, it would not be able to converge to sequences Z and V received by the two mobile terminals. Spy terminal 1s doesn't know either carrier $X_1$ or carrier $X_2$ and is not able to eliminate the contribution of channels $g_1$ and $g_2$ and cannot, therefore, arrive at the same cryptographic key acquired by the mobile terminals.

It's clear how the presence of another spy, such as spy 2s shown in Figure 2, cannot lead to extra information useful for extracting the cryptographic key acquired by mobile terminals 1 and 2. By analyzing the sequence received, additional spy terminals would only be able to obtain information concerning the relationship between channels $g_1(t_1)$ and $g_i(t_1)$ used by them but would not succeed in extracting information useful for the extraction of the key from them.

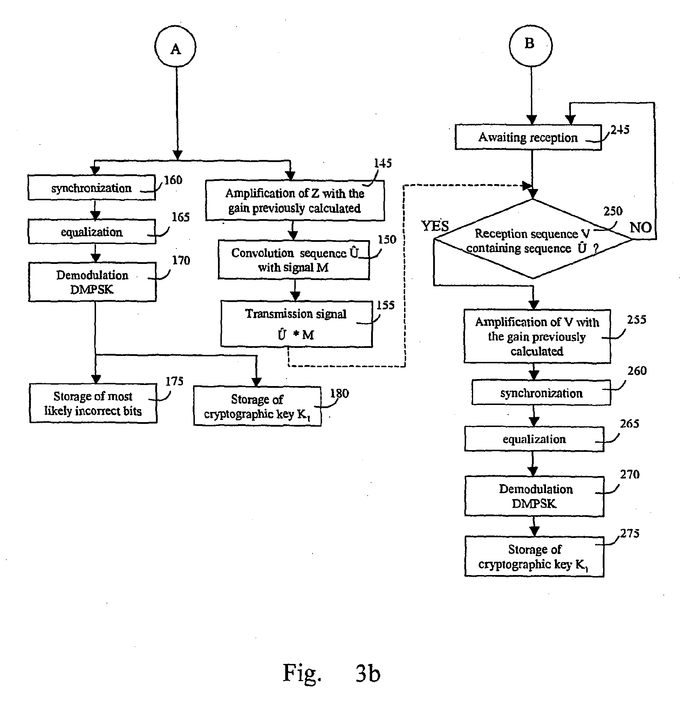

Before being able to use the cryptographic key $K_1$ to encrypt the data packets mobile terminals 1 and 2 intend to exchange during the communication, a control and authentication phase of cryptographic key $K_1$ is required. It's clear that before proceeding to the encryption of data it is necessary to check whether mobile terminals 1 and 2 have the same cryptographic key $K_1$ and if both of them have been clearly identified by the network access system. In order to be authenticated for the first time, the two mobile terminals use a pre-shared authentication key $K_0$ which can be obtained directly from the network administrator or with any known method. To that end, in block 300 of Figure 4, digital processor 20b of mobile terminal 2 encrypts the key $K_1$ with half of the pre-shared key $K_0$, transmits the sequence thus obtained to mobile terminal 1 (block 305 after block 300) and awaits reception (block 350 after block 305). Mobile terminal 1 receives sequence T containing key $K_1$ encrypted with half of the pre-shared key $K_0$ (block 310) and decrypts sequence T (block 315 after block 310) with the same half of the pre-shared key $K_0$ used by mobile terminal 2 to encrypt key $K_1$. If sequence T decrypted by mobile terminal 1 is the same as the key $K_1$ calculated in block 170 in Figure 3b (output YES in block 320 after block 315), the check procedure started by mobile terminal 1 is successfully finished and mobile terminal 2 can be considered clearly identified (block 335).

If decrypted sequence T is not the same as the key $K_1$ calculated in block 170 in Figure 3b (output NO in block 320), mobile terminal 1 starts a correction phase of key $K_1$ (block 325). In this phase mobile terminal 1 identifies the bits stored in block 175 of Figure 3b which correspond to those which could be affected by error in key $K_1$ and replaces them with the combination of bits relating to those differences of phase which are closest to those affected by error (i.e. which are in the adjoining quadrant).

If mobile terminal 1 doesn't reach the same result as mobile terminal 2 (output NO in block 330 after block 325), even after the correction phase, the whole generation and exchange process of the key is restarted (block 310). If, however, following the correction phase, the new key $K_1$ is the same as the sequence T decrypted in block 320 (output YES in block 330), mobile terminal 1 has authenticated the key $K_1$ calculated by mobile terminal 2 (block 335) and key $K_1$ is stored in the memory (block 180 in Figure 3b).

At this point digital processor 20a of mobile terminal 1 encrypts the key $K_1$ calculated in block 180 with the other half of the pre-shared key $K_0$ and transmits the sequence thus obtained to mobile terminal 2 (block 345 after block 340). Mobile terminal 2 receives a sequence W (blocks 350 and 355 after block 305) containing the key $K_1$ encrypted with the other half of pre-shared key $K_0$ (block 345 after block 340) and decrypts sequence W with the same half of pre-shared key $K_0$ used by mobile terminal 1 to encrypt the key $K_1$ (block 360 after block 355). If sequence W decrypted by mobile terminal 2 is the same as the key $K_1$ calculated in block 270 in Figure 3b (output YES in block 365 after block 360), the check procedure started by mobile terminal 2 is successfully finished and mobile terminal 1 can be considered clearly identified (block 380) and key $K_1$ is stored in the memory (block 275 in Figure 3b).. If decrypted sequence W is not the same as the key $K_1$ calculated in block 270 in Figure 3b (output NO in block 65), the whole generation and exchange process of the key is restarted (block 310).

Once the check phase has finished, the two mobile terminals can start to encrypt the information they intend to exchange with the new cryptographic key $K_1$. At the end of communication, key $K_1$ is stored in the memory of the mobile terminals and will be reused to authenticate the same terminals in any successive communication session.

This invention can be designed in many ways, some of which may be different from that described above, maintaining however the same aim. In other words, modifications and variations can be made to the method described and illustrated above without having to leave the protected context of this invention, as defined in the claims attached.

## Claims

**1.** A method for generating and authenticating a cryptographic key (k) for reciprocal authentication of a first station (1) and at least a second station (2) between which a communication is to be established, comprising:

- generating a first carrier (X1) and at least a second carrier (X2) at said first station (1) and said second station (2), respectively;
- performing a data exchange, comprising said carriers (X1, X2), between said first and second stations (1, 2) through a communication channel (h);
- extracting, from the data received by said first and second stations (1, 2), information corresponding to at least one feature of said communication channel (h); and
- generating said cryptographic key (k) at said first and second stations (1, 2), based on said extracted information;

said method being **characterized in that** said first carrier (X1) is known exclusively to said first station (1) and that said second carrier (X2) is known exclusively to said second station (2).

**2.** A method according to any one of the preceding claims, wherein said first and second carriers (X1, X2) have properties of randomness.

**3.** A method according to claim 1, wherein said first and second carriers (X1, X2) have properties of periodicity.

**4.** A method according to Claim 1, wherein said data exchange is performed prevalently in conditions of substantial temporal coherence of said communication channel (h).

**5.** A method according to Claim 2, wherein said data exchange is performed during a time interval shorter than the time of coherence of said communication channel (h).

**6.** A method according to any one of the preceding claims, wherein performing a data exchange comprises:

- transmitting (110), to said second station (2), a first sequence (X1*M) containing said first carrier (X1) convoluted with a first signal (M) with uniform phase coefficients, through said communication channel (h12(t1));
- receiving (215), at said second station (2), a second sequence (Y) corresponding to said first sequence (X1*N4) modified by said communication channel (h12(t1));

- transmitting (230), to said first station (1), a third sequence (X2*S) containing said second carrier (X2) convoluted with a second signal (S) with uniform phase coefficients, through said communication channel (h21(t2));
- receiving (120), at said first station (1), a fourth sequence (U) corresponding to said third sequence (X2*S) modified by said communication channel (h21(t2));
- transmitting (240), to said first station (1), a fifth sequence ($\hat{Y}$*S) containing said second sequence (Y), through said communication channel (h21(t3));

   - receiving (140), at said first station (1), a sixth sequence (Z) corresponding to said fifth sequence ($\hat{Y}$*S) modified by said communication channel (h21(t3));

   - transmitting (155), to said second station (2), a seventh sequence (Û*M) containing said fourth sequence (U), through said communication channel (h12(t4)); and

   - receiving (250), at said second station (2), an eighth sequence (V) corresponding to said seventh sequence (Û*M) modified by said communication channel (h12(t4)).

7. A method according to Claim 6, wherein said information corresponding to at least one feature of said communication channel (h) is extracted from said sixth and eighth sequences (Z, V).

8. A method according to Claim 6 or Claim 7, wherein transmitting (110) a first sequence (X1*M) comprises:

   - performing a convolution between said first carrier (X1) and said first signal (M) with uniform phase coefficients.

9. A method according to any one of Claims 6 to 8, wherein transmitting (230) a third sequence (X2*S) comprises:

   - performing a convolution between said second carrier (X2) and said second signal (S) with uniform phase coefficients.

10. A method according to Claim 6, wherein transmitting (240) a fifth sequence ($\hat{Y}$*S) comprises:

   - multiplying said second sequence (Y) by a ninth sequence (an) to obtain a tenth sequence ($\hat{Y}$); and
   - performing a convolution (235) between said tenth sequence ($\hat{Y}$) and said second signal (S).

11. A method according to Claim 10, wherein said ninth sequence (an) is a function of said second sequence (Y).

12. A method according to Claim 6, wherein transmitting (155) a seventh sequence (Û*M) comprises:

   - multiplying said fourth sequence (U) by an eleventh sequence (bn) to obtain a twelfth sequence (Û); and
   - performing a convolution (150) between said twelfth sequence (Û) and said first signal (M).

13. A method according to Claim 12, wherein said eleventh sequence (bn) is a function of said fourth sequence (U).

14. A method according to Claims 10-13, wherein said eleventh sequence (bn) has a predetermined relation with said ninth sequence (an).

15. A method according to any one of Claims 6 to 14, wherein extracting information corresponding to at least one feature of said communication channel (h) comprises:

   - equalizing (165) said sixth sequence (Z) at said first station (1) to eliminate said first carrier (X1) and extracting coefficients corresponding to the phases of said communication channel (h) during transmission of said first sequence (X1*M) and of said fifth sequence ($\hat{Y}$*S); and
   - equalizing (265) said eighth sequence (V) at said second station (2) to eliminate said second carrier (X2) and extracting phase coefficients of said communication channel (h) during transmission of said third sequence (X2*S) and of said seventh sequence (Û*M).

16. A method according to Claim 12, further comprising:

- demodulating (170, 270), at said first and second stations (1, 2), said sixth and eighth equalized sequences (Z, V), respectively, to encode said phase coefficients of said communication channel (h) convoluted with said first (M) and second signal (S).

17. A method according to Claim 16 wherein said step of demodulating (170, 270), at said first and second stations (1, 2), said sixth and eighth equalized sequences (Z, V), respectively, to encode said phase coefficients of said communication channel (h) convoluted with said first (M) and second signal (S) is performed on the basis of said periodicity properties of said first and second carriers (X1, X2).

18. A method according to any one of the preceding claims, further comprising:

   - authenticating said cryptographic key (k) at said first and second stations (1, 2).

19. A method according to Claim 18, wherein authenticating said cryptographic key (k) at said first and second stations (1, 2) comprises:

   - encrypting (300) said cryptographic key (k) at said second station (2), using a first secret (k0) shared with said first station (1);
   - transmitting (305) a thirteenth sequence containing said encrypted cryptographic key (k) to said first station (1);
   - receiving (310) a fourteenth sequence (T) containing said encrypted cryptographic key (k) at said first station (1);
   - decrypting (315), at said first station (1), said encrypted cryptographic key (k) contained in said fourteenth sequence (T) using said first secret (k0) shared with said second station (2), to extract said cryptographic key (k);
   - verifying (320) whether the cryptographic key (k) extracted at said first station (1) is equal to the cryptographic key (k) transmitted by said second station (2);
   - authenticating (325) said second station (2) if said cryptographic key (k) extracted at said first station (1) is equal to the cryptographic key (k) transmitted by said second station (2);
   - encrypting (340) said cryptographic key (k) at said first station (1) with a second secret (k0) shared with said second station (2);
   - transmitting (345) a fifteenth sequence containing said encrypted cryptographic key (k) to said second station (2);
   - receiving (355) a sixteenth sequence (W) containing said encrypted cryptographic key (k) at said second station (2);
   - decrypting (360), at said second station (2), said encrypted cryptographic key (k) contained in said sixteenth sequence (W), using said second secret (k0);
   - verifying (365) whether the cryptographic key (k) extracted at said second station (1) is equal to the cryptographic key (k) transmitted by said first station (1); and
   - authenticating (325) said first station (1) if said cryptographic key (k) extracted at said second station (1) is equal to the cryptographic key (k) transmitted by said first station (1).

20. A method according to any one of the preceding Claims, further comprising:

   - correcting, at one between said first and second stations (1, 2), the encoding of said phase coefficients of said communication channel (h) if said cryptographic key (k) is not authenticated at said first and second stations (1, 2).

21. A device for generating and authenticating a cryptographic key (k) for reciprocal authentication of a first station (1) and at least a second station (2) between which a communication is to be established, said device being **characterized in that** it is configured to implement the method according to any one of the preceding claims.

**Patentansprüche**

1. Verfahren zur Generierung und Authentifizierung eines kryptografischen Schlüssels (k) zur reziproken Authentifizierung einer ersten Station (1) und wenigstens einer zweiten Station (2), zwischen denen eine Kommunikation aufgebaut werden soll, umfassend

   - Generieren eines ersten Trägers (X1) und wenigstens eines zweiten Trägers (X2) jeweils an der ersten Station (1) und der zweiten Station (2);
   - Durchführung eines Datenaustauschs, der die Träger (X1, X2) umfasst, zwischen der ersten und der zweiten Station (1,2) durch einen Kommunikationskanal (h);

- Extrahieren einer Information, die wenigstens einem Merkmal des Kommunikationskanals (h) entspricht, aus den von der ersten und zweiten Station (1, 2) empfangenen Daten; und
- Generieren des kryptografischen Schlüssels (k) an der ersten und zweiten Station (1,2), basierend auf der extrahierten Information;

welches Verfahren **dadurch gekennzeichnet ist, dass** der erste Träger (X1) exklusiv der ersten Station (1) bekannt ist, und dass der zweite Träger (X2) exklusiv der zweiten Station bekannt ist.

2. Verfahren nach einem der vorhergehenden Ansprüche, bei welchem der erste und zweite Träger (X1, X2) Zufallseigenschaften haben.

3. Verfahren nach Anspruch 1, bei welchem der erste und zweite Träger (X1, X2) Periodizitätseigenschaften aufweisen.

4. Verfahren nach Anspruch 1, bei dem der Datenaustausch, vorzugsweise in Fällen einer im Wesentlichen zeitlichen Kohärenz des Kommunikationskanals (h) durchgeführt wird.

5. Verfahren nach Anspruch 2, bei dem der Datenaustausch während eines Zeitintervalls durchgeführt wird, der kürzer ist als die Kohärenzzeit des Kommunikationskanals (h).

6. Verfahren nach einem der vorhergehenden Ansprüche, bei welchem die Durchführung eines Datenaustauschs umfasst:

- Übermitteln (110) der zweiten Station (2) eine erste Sequenz (X1 *M), die den ersten Träger (X1) aufweist, der verknüpft ist mit einem ersten Signal (M) mit uniformen Phasenkoeffizienten, durch den Kommunikationskanal (h12(t1));
- An der zweiten Station (2) Empfangen (215) einer zweiten Sequenz (Y), die der ersten Sequenz (X1*M) modifiziert durch den Kommunikationskanal (h12(t1)) entspricht;
- Übermitteln (230) an die erste Station (1) einer dritten Sequenz (X2*S), die den zweiten Träger (X2) enthält, der mit einem zweiten Signal (S) mit uniformen Phasenkoeffizienten verknüpft ist, durch den Kommunikationskanal (h21(t2));
- An der ersten Station (1) Empfangen (120) einer vierten Sequenz (U) entsprechend der dritten Sequenz (X2*S), modifiziert durch den Kommunikationskanal (h21(t2));
- Übermitteln (240) der ersten Station (1) eine fünfte Sequenz ($\hat{Y}$*S), die die zweite Sequenz (Y) enthält, durch den Kommunikationskanal (h21(t3));
- An der ersten Station (1) Empfangen (140) einer sechsten Sequenz (Z) entsprechend der fünften Sequenz ($\hat{Y}$*S), modifiziert durch den Kommunikationskanal (h21(t3));
- Übermitteln (155) der zweiten Station (2) eine siebte Sequenz ($\hat{U}$*M) enthaltend die vierte Sequenz (U), durch den Kommunikationskanal (hl2(t4)); und
- Empfangen (250) an der zweiten Station (2) eine achte Sequenz (V) entsprechend der siebten Sequenz ($\hat{U}$*M) modifiziert durch den Kommunikationskanal (h12(t4)).

7. Verfahren nach Anspruch 6, bei dem die Information, die wenigstens einem Merkmal des Kommunikationskanals (h) entspricht, extrahiert wird aus den sechsten und achten Sequenzen (Z, V).

8. Verfahren nach Anspruch 6 oder 7, bei dem das Übermitteln (110) einer ersten Sequenz (X1 *M) enthält:

- Durchführen einer Verknüpfung zwischen dem ersten Träger (X1) und dem ersten Signal (M) mit uniformen Phasenkoeffizienten.

9. Verfahren nach einem der Ansprüche 6 bis 8, bei dem das Übermitteln (230) einer dritten Sequenz (X2*S) enthält:

- Durchführen einer Verknüpfung zwischen dem zweiten Träger (X2) und dem zweiten Signal (S) mit uniformen Phasenkoeffizienten.

10. Verfahren nach Anspruch 6, bei welchem das Übermitteln (240) einer fünften Sequenz ($\hat{Y}$*S) enthält:

- Vervielfältigen der zweiten Sequenz (Y) durch eine neunte Sequenz (an) um eine zehnte Sequenz ($\hat{Y}$) zu

erhalten; und
- Durchführung einer Verknüpfung (235) zwischen der zehnten Sequenz ($\hat{Y}$) und dem zweiten Signal (S).

11. Verfahren nach Anspruch 10, bei dem die neunte Sequenz (an) eine Funktion der zweiten Sequenz (Y) ist.

12. Verfahren nach Anspruch 6, bei welchem das Übermitteln (155) einer siebten Sequenz (Û*M) enthält:

- Multiplizieren der vierten Sequenz (U) mit einer elften Sequenz (bn) um eine zwölfte Sequenz (Û) zu erhalten; und
- Durchführen einer Verknüpfung (150) zwischen der zwölften Sequenz (Û) und dem ersten Signal (M).

13. Verfahren nach Anspruch 12, bei dem die elfte Sequenz (bn) eine Funktion der vierten Sequenz (U) ist.

14. Verfahren nach einem der Ansprüche 10 - 13, bei dem die elfte Sequenz (bn) eine vorbestimmte Beziehung zu der neunten Sequenz (an) hat.

15. Verfahren nach einem der Ansprüche 6 bis 14, bei dem das Extrahieren der Information entsprechend wenigstens einem Merkmal des Kommunikationskanals (h) enthält:

- Ausgleichen (165) der sechsten Sequenz (Z) an der ersten Station (1) zum Eliminieren des ersten Trägers (X1) und Extrahieren von Koeffizienten entsprechend den Phasen des Kommunikationskanals (h) während der Übermittlung der ersten Sequenz (X1*M) und der fünften Sequenz ($\hat{Y}$*S); und
- Ausgleichen (265) der achten Sequenz (V) an der zweiten Station (2) zum Eliminieren des zweiten Trägers (X2) und Extrahieren der Phasenkoeffizienten des Kommunikationskanals (h) während der Übertragung der dritten Sequenz (X2*S) und der siebten Sequenz (Û*M).

16. Verfahren nach Anspruch 12, weiterhin enthaltend:

- Demodulieren (170, 270) an der ersten und zweiten Station (1, 2), jeweils der sechsten und achten ausgeglichenen Sequenzen (Z, V), um die Phasenkoeffizienten des Kommunikationskanals, die mit dem ersten (M) und zweiten Signal (S) verknüpft sind, zu kodieren.

17. Verfahren nach Anspruch 16, bei welchem an der ersten und zweiten Station (1,2) jeweils der Schritt des Demodulierens (170, 270) der sechsten und achten gleichgerichteten Sequenzen (Z, V) zum Kodieren der Phasenkoeffizienten des Kommunikationskanals (h), die mit dem ersten (M) und dem zweiten Signal (S) verknüpft sind, durchgeführt wird auf der Basis der Periodizitätseigenschaften des ersten und zweiten Trägers (X1, X2).

18. Verfahren nach einem der vorhergehenden Ansprüche, weiterhin enthaltend:

- Authentifizieren des kryptografischen Schlüssels (k) an der ersten und zweiten Station (1, 2).

19. Verfahren nach Anspruch 18, bei welchem die Authentifizierung des kryptografischen Schlüssels (k) an der ersten und zweiten Station folgende Schritte enthält:

- Verschlüsseln (330) des kryptografischen Schlüssels (k) an der zweiten Station (2) unter Verwendung eines ersten Geheimnisses (k0), das mit der ersten Station (1) geteilt wird;
- Übermitteln (305) einer dreizehnten Sequenz, die den verschlüsselten kryptografischen Schlüssel (k) enthält, an die erste Station (1);
- Empfangen (310) an der ersten Station (1) eine vierzehnte Sequenz (T), die den verschlüsselten kryptografischen Schlüssel (k) enthält;
- An der ersten Station (1) Entschlüsseln (315) des verschlüsselten kryptografischen Schlüssel (k), der in der vierzehnten Sequenz (T) enthalten ist, unter Verwendung des ersten Geheimnisses (k0), das mit der zweiten Station (2) geteilt wird, um den kryptografischen Schlüssel (k) zu extrahieren;
- Verifizieren (320), ob der kryptografische Schlüssel (k), der an der ersten Station (1) extrahiert wurde, gleich den kryptografischen Schlüssel (k) ist, der von der zweiten Station (2) übermittelt wurde;
- Authentifizieren (325) der zweiten Station (2), wenn der an der ersten Station (1) extrahierte kryptografische Schlüssel (k) gleich dem kryptografischen Schlüssel (k) ist, der von der zweiten Station (2) übermittelt worden ist;
- Verschlüsseln (340) des kryptografischen Schlüssels (k) an der ersten Station (1) mit einem zweiten Geheimnis (k0), das mit der zweiten Station (2) geteilt wird;

- Übermitteln (345) einer fiinfzehnten Sequenz, die den verschlüsselten kryptografischen Schlüssel (k) enthält, zur zweiten Station (2);
- Empfangen (355) an der zweiten Station (2) einer sechzehnten Sequenz (W), die den verschlüsselten kryptografischen Schlüssel (k) enthält;
- Entschlüsseln (360) des verschlüsselten kryptografischen Schlüssels (k), der in der sechzehnten Sequenz (W) enthalten ist, in der zweiten Station (2) unter Verwendung des zweiten Geheimnisses (k0);
- Verifizieren (365), ob der an der zweiten Station (2) extrahierte kryptografische Schlüssel (k) gleich dem kryptografischen Schlüssel (k) ist, der von der ersten Station (1) übermittelt wurde; und
- Authentifizieren (325) der ersten Station (1), wenn der an der zweiten Station (2) extrahierte kryptografische Schlüssel (k) gleich dem von der ersten Station (1) übermittelten kryptografischen Schlüssel (k) ist.

**20.** Verfahren nach einem der vorhergehenden Ansprüche, weiterhin enthaltend:

- Bei Einigkeit oder gleichzeitig zwischen der ersten und der zweiten Station (1, 2) Korrigieren der Kodierung der Phasenkoeffizienten des Kommunikationskanals (h), wenn der kryptografische Schlüssel (k) nicht an der ersten und zweiten Station (1, 2) authentifiziert ist.

**21.** Einrichtung zum Generieren und Authentifizieren eines kryptografischen Schlüssels (k) zur reziproken Authentifizierung einer ersten Station (1) und wenigstens einer zweiten Station (2), zwischen denen eine Kommunikation aufgebaut werden soll, welche Einrichtung **dadurch gekennzeichnet ist, dass** sie konfiguriert ist zur Realisierung des Verfahrens nach einem der vorhergehenden Ansprüche.

## Revendications

**1.** Procédé pour générer et authentifier une clé de chiffrement (k) pour une authentification réciproque d'une première station (1), et d'au moins une seconde station (2), entre lesquelles une communication doit être établie, comportant les étapes consistant à :

- générer une première porteuse (X1), et au moins une seconde porteuse (X2) au niveau de ladite première station (1) et de ladite seconde station (2), respectivement ;
- mettre en oeuvre un échange de données, incluant lesdites porteuses (X1, X2), entre lesdites première et seconde stations (1, 2) via un canal de communication (h) ;
- extraire, à partir des données reçues par lesdites première et seconde stations (1, 2), des informations correspondant à au moins une caractéristique dudit canal de communication (h) ; et
- générer ladite clé de chiffrement (k) au niveau desdites première et seconde stations (1, 2), sur la base desdites informations extraites,

ledit procédé étant **caractérisé en ce que** ladite première porteuse (X1) est connue exclusivement de ladite première station (1) et **en ce que** ladite seconde porteuse (X2) est connue exclusivement de ladite seconde station (2).

**2.** Procédé selon l'une quelconque des revendications précédentes, dans lequel lesdites première et seconde porteuses (X1, X2) présentent des propriétés de caractère aléatoire.

**3.** Procédé selon la revendication 1, dans lequel lesdites première et seconde porteuses (X1, X2) présentent des propriétés de périodicité.

**4.** Procédé selon la revendication 1, dans lequel ledit échange de données est mis en oeuvre essentiellement dans des conditions de cohérence temporelle considérable dudit canal de communication (h).

**5.** Procédé selon la revendication 2, dans lequel ledit échange de données est mis en oeuvre au cours d'un intervalle de temps plus court que le temps de cohérence dudit canal de communication (h).

**6.** Procédé selon l'une quelconque des revendications précédentes, dans lequel l'étape consistant à mettre en oeuvre un échange de données comporte les étapes consistant à :

- transmettre (110), à ladite seconde station (2), une première séquence (X1 * M) contenant ladite première porteuse (X1) à laquelle on applique une convolution avec un premier signal (M) avec des coefficients de phase uniformes, par l'intermédiaire dudit canal de communication (h12(t1));

- recevoir (215), au niveau de ladite seconde station (2), une deuxième séquence (Y) correspondant à ladite première séquence (X1 * M) modifiée par ledit canal de communication (h12(t1)) ;

- transmettre (230), à ladite première station (I), une troisième séquence (X2 * S) contenant ladite seconde porteuse (X2) à laquelle on applique une convolution avec un second signal (S), avec des coefficients de phase uniformes, par l'intermédiaire dudit canal de communication (h21(t2)) ;

- recevoir (120), au niveau de ladite première station (1), une quatrième séquence (U) correspondant à ladite troisième séquence (X2 * S) modifiée par ledit canal de communication (h21(t2)) ;

- transmettre (240), à ladite première station (1), une cinquième séquence (Y * S) contenant ladite deuxième séquence (Y), par l'intermédiaire dudit canal de communication (h21(t3)) ;

- recevoir (140), au niveau de ladite première station (1), une sixième séquence (Z) correspondant à ladite cinquième séquence ($\hat{Y}$ * S) modifiée par ledit canal de communication (h21(t3)) ;

- transmettre (155), à ladite seconde station (2), une septième séquence ($\hat{U}$ * M) contenant ladite quatrième séquence (U), par l'intermédiaire dudit canal de communication (h12(t4)) ; et

- recevoir (250), au niveau de ladite seconde station (2), une huitième séquence (V) correspondant à ladite septième séquence ($\hat{U}$ * M) modifiée par ledit canal de communication (h12(t4)).

**7.** Procédé selon la revendication 6, dans lequel lesdites informations correspondant à au moins une caractéristique dudit canal de communication (h) sont extraites à partir desdites sixième et huitième séquences (Z, V).

**8.** Procédé selon la revendication 6 ou 7, dans lequel l'étape consistant à transmettre (110) une première séquence (X1 * M) comporte les étapes consistant à :

- mettre en oeuvre une convolution entre ladite première porteuse (X1) et ledit premier signal (M) avec des coefficients de phase uniformes.

**9.** Procédé selon l'une quelconque des revendications 6 à 8, dans lequel l'étape consistant à transmettre (230) une troisième séquence (X2 * S) comporte les étapes consistant à :

- mettre en oeuvre une convolution entre ladite seconde porteuse (X2) et ledit second signal (S) avec des coefficients de phase uniformes.

**10.** Procédé selon la revendication 6, dans lequel l'étape consistant à transmettre (240) une cinquième séquence ($\hat{Y}$ * S) comporte les étapes consistant à :

- multiplier ladite deuxième séquence (Y) par une neuvième séquence (an) pour obtenir une dixième séquence ($\hat{Y}$) ; et

- mettre en oeuvre une convolution (235) entre ladite dixième séquence ($\hat{Y}$) et ledit second signal (S).

**11.** Procédé selon la revendication 10, dans lequel ladite neuvième séquence (an) est en fonction de ladite deuxième séquence (Y).

**12.** Procédé selon la revendication 6, dans lequel l'étape consistant à transmettre (155) une septième séquence ($\hat{U}$ * M) comporte les étapes consistant à :

- multiplier ladite quatrième séquence (U) par une onzième séquence (bn) pour obtenir une douzième séquence ($\hat{U}$) ; et

- mettre en oeuvre une convolution (150) entre ladite douzième séquence ($\hat{U}$) et ledit premier signal (M).

**13.** Procédé selon la revendication 12, dans lequel ladite onzième séquence (bn) est en fonction de ladite quatrième séquence (U).

**14.** Procédé selon la revendication 10 à 13, dans lequel ladite onzième séquence (bn) présente une relation prédéterminée avec ladite neuvième séquence (an).

**15.** Procédé selon l'une quelconque des revendications 6 à 14, dans lequel l'étape consistant à extraire des informations correspondant à au moins une caractéristique dudit canal de communication (h) comporte les étapes consistant à :

- égaliser (165) ladite sixième séquence (Z) au niveau de ladite première station (1) pour éliminer ladite première porteuse (X1) et extraire des coefficients correspondant aux phases dudit canal de communication (h) au cours de la transmission de ladite première séquence (X1 * M) et de ladite cinquième séquence (Ŷ * S) ; et

- égaliser (265) ladite huitième séquence (V) au niveau de ladite seconde station (2) pour éliminer ladite seconde porteuse (X2) et extraire des coefficients de phase dudit canal de communication (h) au cours de la transmission de ladite troisième séquence (X2 * S) et de ladite septième séquence (Û * M).

16. Procédé selon la revendication 12, comportant en outre l'étape consistant à :

- démoduler (170, 270), au niveau desdites première et seconde stations (1, 2), lesdites sixième et huitième séquences égalisées (Z, V), respectivement, pour coder lesdits coefficients de phase dudit canal de communication (h) à laquelle on applique une convolution avec ledit premier signal (M) et ledit second signal (S).

17. Procédé selon la revendication 16 dans lequel ladite étape consistant à démoduler (170, 270), au niveau desdites première et seconde stations (1, 2), lesdites sixième et huitième séquences égalisées (Z, V), respectivement, pour coder lesdits coefficients de phase dudit canal de communication (h) à laquelle on applique une convolution avec ledit premier signal (M) et ledit second signal (S) est mise en oeuvre sur la base desdites propriétés de périodicité desdites première et seconde porteuses (X1, X2).

18. Procédé selon l'une quelconque des revendications précédentes, comportant en outre l'étape consistant à :

- authentifier ladite clé de chiffrement (k) au niveau desdites première et seconde stations (1, 2).

19. Procédé selon la revendication 18, dans lequel ladite étape consistant à authentifier ladite clé de chiffrement (k) au niveau desdites première et seconde stations (1, 2) comporte les étapes consistant à :

- chiffrer (300) ladite clé de chiffrement (k) au niveau de ladite seconde station (2), en utilisant une première clé secrète (k0) partagée avec ladite première station (1) ;

- transmettre (305) une treizième séquence contenant ladite clé de chiffrement chiffrée (k) à ladite première station (1) ;

- recevoir (310) une quatorzième séquence (T) contenant ladite clé de chiffrement chiffrée (k) au niveau de ladite première station (1) ;

- déchiffrer (315), au niveau de ladite première station (1), ladite clé de chiffrement chiffrée (k) contenue dans ladite quatorzième séquence (T) en utilisant ladite première clé secrète (k0) partagée avec ladite seconde station (2), pour extraire ladite clé de chiffrement (k) ;

- vérifier (320) si la clé de chiffrement (k) extraite au niveau de ladite première station (1) est identique à la clé de chiffrement (k) transmise par ladite seconde station (2) ;

- authentifier (325) ladite seconde station (2) si ladite clé de chiffrement (k) extraite au niveau de ladite première station (1) est identique à la clé de chiffrement (k) transmise par ladite seconde station (2) ;

- chiffrer (340) ladite clé de chiffrement (k) au niveau de ladite première station (1) avec une seconde clé secrète (k0) partagée avec ladite seconde station (2) ;

- transmettre (345) une quinzième séquence contenant ladite clé de chiffrement chiffrée (k) à ladite seconde station (2) ;

- recevoir (355) une seizième séquence (W) contenant ladite clé de chiffrement chiffrée (k) au niveau de ladite seconde station (2) ;

- déchiffrer (360), au niveau de ladite seconde station (2), ladite clé de chiffrement chiffrée (k) contenue dans ladite seizième séquence (W), en utilisant ladite seconde clé secrète (k0) ;

- vérifier (365) si la clé de chiffrement (k) extraite au niveau de ladite seconde station (1) est identique à la clé de chiffrement (k) transmise par ladite première station (1) ; et

- authentifier (325) ladite première station (1) si ladite clé de chiffrement (k) extraite au niveau de ladite seconde station (1) est identique à la clé de chiffrement (k) transmise par ladite première station (1).

20. Procédé selon l'une quelconque des revendications précédentes, comportant en outre l'étape consistant à :

- corriger, au niveau de l'une desdites première et seconde stations (1, 2), le codage desdits coefficients de phase dudit canal de communication (h) si ladite clé de chiffrement (k) n'est pas authentifiée au niveau desdites première et seconde stations (1, 2).

21. Dispositif pour générer et authentifier une clé de chiffrement (k) pour une authentification réciproque d'une première station (1) et d'au moins une seconde station (2), entre lesquelles une communication doit être établie, ledit dispositif étant **caractérisé en ce qu'**il est configuré pour mettre en oeuvre le procédé selon l'une quelconques des revendications précédentes.

Fig. 1

EP 1 844 572 B1

Fig. 2

**Mobile Terminal 1**

**Mobile Terminal 2**

100 — Generation randomly carrier $X_1$

200 — Generation randomly carrier $X_2$

105 — Convolution carrier $X_1$ with signal M

205 — Convolution carrier $X_2$ with signal S

210 — Awaiting reception

110 — Transmission signal $X_1 * M$

215 — Reception sequence Y containing $X_1 * M$?

YES          NO

115 — Awaiting reception

220 — Automatic Gain Control of Y

120 — Reception sequence U containing $X_2 * S$?

YES

NO

225 — Storage of Y

125 — Amplification of U with the gain previously calculated

230 — Transmission signal $X_2 * S$

130 — Storage of U

235 — Convolution sequence $\hat{Y}$ with signal S

135 — Awaiting reception

140 — Reception sequence Z containing sequence $\hat{Y}$?

NO

YES

240 — Transmission Signal $\hat{Y} * S$

A

B

**Fig.  3a**

Fig.   3b

**Mobile Terminal 1**

**Mobile Terminal 2**

Encryption key $K_1$ with half of authentication key $K_0$ — 300

Reception of a sequence T containing the encrypted key $K_1$ — 310

Transmission of encrypted key $K_1$ — 305

Decryption of the sequence T with half of authentication key $K_0$ — 315

Decrypted T = $K_1$ ? — 320
YES / NO

Awaiting reception — 350

To correct decrypted key T — 325

is key T correct? — 330
YES / NO

Mobile terminal 2 is authenticated — 335

Repeat the whole generation and exchange process — 310

Encryption key $K_1$ with the other half of authentication key $K_0$ — 340

Transmission of encrypted key $K_1$ — 345

Reception of a sequence W containing encrypted key $K_1$ — 355

Decryption sequence W with the other half of authentication key $K_0$ — 360

Decrypted W = $K_1$ ? — 365
NO / YES

Mobile terminal 1 is authenticated — 380

## Fig. 4

| Phase change ($S_k$, $S_{k-1}$) | Bit pattern |
|---|---|
| $[0, \pi/4[$ | 000 |
| $[\pi/4, \pi/2[$ | 001 |
| $[\pi/2, 3\pi/4[$ | 011 |
| $[3\pi/4, \pi[$ | 010 |
| $[\pi, 5\pi/4[$ | 110 |
| $[5\pi/4, 3\pi/2[$ | 111 |
| $[3\pi/2, 7\pi/4[$ | 101 |
| $[7\pi/4, 2\pi[$ | 100 |

Fig. 5

**EP 1 844 572 B1**

## REFERENCES CITED IN THE DESCRIPTION

**Patent documents cited in the description**

- WO 9622643 A